# EUROPEAN PATENT APPLICATION

(11) **EP 4 137 404 A1**
(43) Date of publication of application: **22.02.2023**
(21) Application number: 20931074.7
(22) Date of filing: 14.04.2020
(51) Int. Cl.: B64C 27/08

(54) **MULTICOPTER**

(71) Applicant: KAWASAKI JUKOGYO KABUSHIKI KAISHA, Kobe-shi, Hyogo 650-8670 (JP)
(72) Inventor: HANAMITSU, Akira, Kobe-shi, Hyogo 650-8670 (JP)
(74) Representative: Betten & Resch
(86) International application number: PCT/JP2020/016421
(87) International publication number: WO 2021/210065

(57) **Abstract**

A multicopter 1 comprises: a support 10; rotors 20 supported by the support 10; an internal combustion engine 32 supported by the support 10; a generator 47 supported by the support 10 and driven by the internal combustion engine 32 to generate power; electric motors 48 supported by the support 10, supplied with electric power from the generators 47, and configured to drive the rotors 20; and a controller configured to control a flight of an aircraft by individually adjusting a rotational speed of each of the rotors 20. The multicopter 1 also comprises at least one of a plurality of the internal combustion engines 32 or a plurality of the generators 47.

## Description

### TECHNICAL FIELD

The present invention relates to a multicopter.

### BACKGROUND ART

The multicopter disclosed in Patent Document 1 uses a battery as a main power source. In addition, the multicopter supplies power generated by the power generation unit to the battery when the remaining battery level of the battery becomes lower than a threshold value.

### PRIOR ART DOCUMENT

### PATENT DOCUMENT

Patent Document 1: JP 2016-88110 A

### SUMMARY OF THE INVENTION

### PROBLEMS TO BE SOLVED BY THE INVENTION

However, in the multicopter described in Patent Document 1, since the main power source is a battery, the longer the flyable time, the more the battery capacity and the more the weight. In addition, when the battery fails, flight is impossible.

An object of the present invention is to provide a multicopter capable of improving reliability while preventing an increase in size of a power storage apparatus.

### MEANS FOR SOLVING THE PROBLEMS

Provided is a multicopter including:
a support;
rotors supported by the support;
an internal combustion engine supported by the support;
a generator supported by the support and driven by the internal combustion engine to generate power;
electric motors supported by the support, supplied with electric power from the generator, and configured to drive the rotors; and
a controller configured to control a flight of an airframe by individually adjusting a rotor speed of each of the rotors, in which
the multicopter comprises at least the internal combustion engines or the generators.

With this configuration, since the power supply state can be maintained by generating electric power due to the internal combustion engine, it is possible to prevent an increase in size of the power storage apparatus that stores electricity even in a long-time flight. In addition, by including at least the internal combustion engines or the generators, even if an abnormality occurs in some drive apparatuses of the internal combustion engine and the generator, the power supply state can be maintained by the remaining drive apparatuses. As described above, in the internal combustion engine and the generator, since the drive state is -easily maintained even when there is an abnormality, the reliability of the multicopter as a whole can be improved.

The multicopter may include an aggregated electric circuit configured to aggregate electric power generated by the generators. The electric motors may be connected to the aggregated electric circuit.

According to this configuration, the electric power generated by each generator is aggregated by the aggregated electric circuit and supplied to the electric motors. By driving the electric motors with the aggregated electric power, even when an abnormality occurs in some drive apparatuses of the internal combustion engine and the generator, it is possible to suppress a decrease in the power supply amount by increasing the power generation amount of other drive apparatuses.

The multicopter may include power generation units including the internal combustion engine and the generator provided correspondingly. Each of the power generation units may be configured to change an output. The controller may include an abnormality determination unit that determines whether an abnormality has occurred in the power generation units, and when the abnormality determination unit determines that at least one of the power generation units has an abnormality, the controller may control so that an output from another power generation unit in which no abnormality has occurred is higher than a reference output.

According to this configuration, when it is determined that the abnormality occurs in at least one of the plurality of power generation units, as described above, the influence due to the decrease in the power supplied to the electric motor can be suppressed by operating the other power generation units at a high output. For example, it is possible to suppress a decrease in the output of the multicopter in the abnormality determination state.
a plurality of the internal combustion engines can be provided in an output-variable manner between in a reference output range in which an output at a predetermined reference engine speed is configured to be output and in a high output range in which a high output at a high output engine speed higher than the reference engine is output. When the abnormality determination unit determines that no abnormality has occurred, the controller can control in a normal flight mode in which outputs of the plurality of the internal combustion engines are set to the reference output range, and when the abnormality determination unit determines that an abnormality has occurred, the controller can control in an abnormal flight mode in which an output of an internal combustion engine in which no abnormality has occurred among the plurality of the internal combustion engines is set to the high output range.

The controller can control to stop the driving of the power generation unit in which the abnormality determination unit determines that an abnormality occurs.

With this configuration, it is possible to prevent the progress and deterioration of the abnormal state. For example, by stopping driving by early abnormality determination, it is easy to maintain the abnormality in a slightly damaged state. For example, recovery to a normal state by repair can be accelerated.

The multicopter may further include a capacitor configured to transfer power to and from the aggregated electric circuit. The electric motors may be supplementarily supplied with electric power from the capacitor in addition to electric power from the generator.

According to this configuration, power can be supplementarily supplied by the capacitor in a transition period until the output of the power generation unit is raised from the reference output to the high output. Therefore, the capacitor can compensate for the response delay of the power generation of the generator associated with the output change of the internal combustion engine. Therefore, it is possible to stabilize the power supply in the transient state in which the output of the internal combustion engine is changed. In particular, since performing discharge by an electrostatic effect, the capacitor can discharge a large current as compared with discharge by a chemical reaction. Therefore, the capacitor can cope with an instantaneous power demand in a relatively small shape.

The multicopter includes an electrical equipment for driving each of the plurality of rotors. The internal combustion engines are disposed behind the electrical equipment in a traveling direction.

According to this configuration, since an airflow flowing from the front to the rear is generated during flight progression, the air around the internal combustion engine heated by the internal combustion engine is prevented from going toward the electrical equipment. This makes it possible to suppress a temperature rise of the electrical equipment.

The multicopter may include a luggage room configured to house a load. The luggage room may be disposed below the internal combustion engine.

The air around the internal combustion engine heated by the internal combustion engine flows upward along with the temperature rise. In the present configuration, since the luggage room is disposed below the internal combustion engine, the heated air around the internal combustion engine easily moves in a direction away from the luggage room, and a temperature rise in the luggage room can be prevented.

### EFFECTS OF THE INVENTION

With the above configuration, it is possible to achieve a multicopter capable of improving reliability and functionality while preventing an increase in size of the power storage apparatus.

### BRIEF DESCRIPTION OF THE DRAWINGS

Fig. 1 is a plan view showing an overall configuration of a multicopter according to an embodiment of the present invention.
Fig. 2 is a side view showing an overall configuration of a multicopter according to an embodiment of the present invention.
Fig. 3 is a configuration diagram showing a cooling structure of a multicopter according to an embodiment of the present invention.
Fig. 4 is an electrical configuration diagram of a multicopter according to an embodiment of the present invention.
Fig. 5 is a characteristic diagram of an internal combustion engine of a multicopter according to an embodiment of the present invention.
Fig. 6 is a characteristic diagram of an internal combustion engine of a multicopter according to a modification.

### MODE FOR CARRYING OUT THE INVENTION

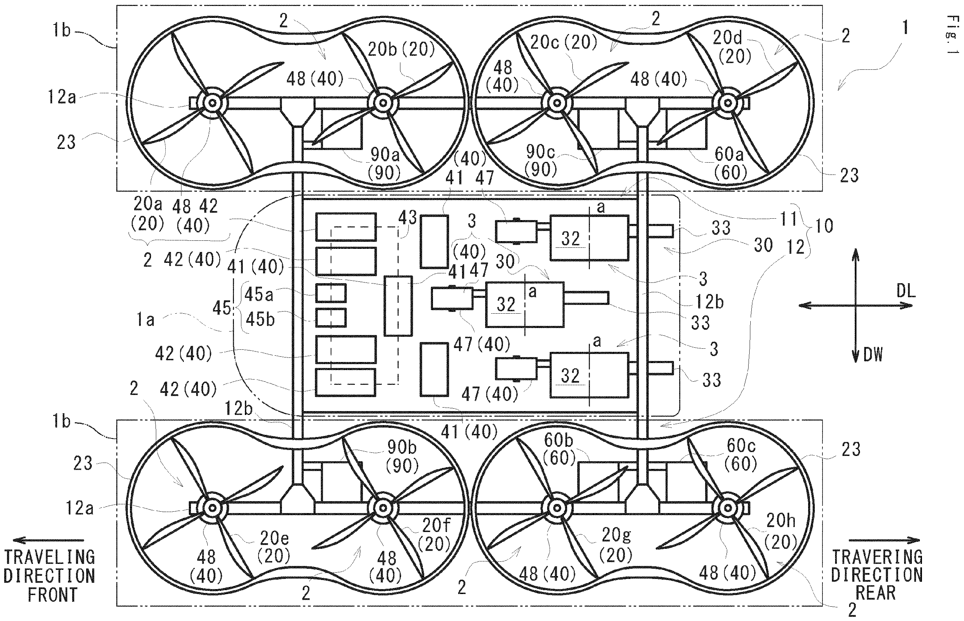

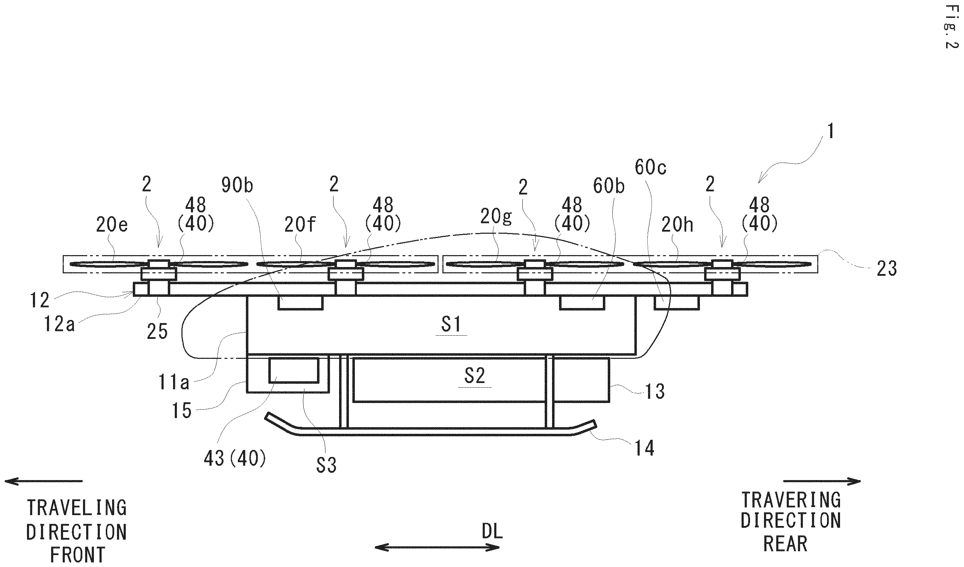

With reference to Fig 1 and 2, an overall configuration of a multicopter 1 according to an embodiment of the present invention will be described.

A configuration of a multicopter 1 according to an embodiment of the present invention will be described with reference to Figs. 1 and 2.

The multicopter 1 in the present embodiment can perform attitude control by individually rotation-controlling a plurality of rotors 20 by respective electric motors (motors) 48. The inclination and the rotation axis of the rotor 20 are maintained at predetermined fixed values.

In the multicopter 1 of the present embodiment, an engine 32 which is an internal combustion engine is used as a drive source of the rotor 20. The multicopter 1 converts the mechanical output output by the engine 32 into power due to a generator 47. The multicopter 1 supplies the electric power generated in this manner to the motor 48 to rotate the rotor 20. The multicopter 1 of the present embodiment flies by driving a plurality of rotors 20 by the power of the motors 48, and the engine 32 is used only for power generation. In other words, in the multicopter 1 of the present embodiment, the power of the engine 32 does not directly drive the plurality of rotors 20.

The multicopter 1 of the present embodiment includes a plurality of rotors 20, a motor 48 individually provided for each of the plurality of rotors 20, a plurality of engines 32, a plurality of generators 47, a controller 45 for controlling each motor 48, and a support 10 for supporting these components.

The multicopter 1 of the present embodiment includes a rotor unit 2 unitized including the rotor 20, the motor 48, and an inverter 42, and a power generation unit 3 unitized including the engine 32, the generator 47, and a converter 41.

In the multicopter 1, a predetermined reference plane and an orthogonal direction orthogonal to the reference plane are set. The rotor blades of each rotor 20 extend substantially along the reference plane. In other words, the rotation axis of each rotor 20 extends substantially along the orthogonal direction.

As shown in Fig. 1, a case where a reference plane set to the multicopter 1 extends horizontally will be described as a reference attitude of the multicopter 1. Hereinafter, unless otherwise specified, description will be made based on the reference attitude. In the reference attitude, the rotor blades of each rotor 20 extend substantially along a horizontal plane. The rotation axis of each rotor 20 extends substantially along the vertical direction. Therefore, in the reference attitude, the multicopter 1 has lift generated in the vertical direction.

The respective rotors 20 are spaced apart from each other in the horizontal direction. Each rotor 20 is disposed at a position in a plan view, away from the position of the center of gravity of the multicopter 1 and surrounding the position of the center of gravity.

In the multicopter 1, in a plan view, a fuselage region 1a including the position of the center of gravity of the multicopter 1 and adjacent to the plurality of rotors 20, and a rotor-side region 1b positioned closer to the plurality of rotors 20 with respect to the fuselage region 1a are defined. In a plan view, the fuselage region 1a is a region inside a polygon connecting the rotation axes of the plurality of rotors 20. In the present embodiment, in a plan view, the fuselage region 1a is formed in an elongated shape. In a plan view, the long side direction of the fuselage region 1a may be referred to as an airframe front-rear direction DL, and the short side direction of the fuselage region may be referred to as an airframe width direction DW. The airframe front-rear direction DL is a direction parallel to the direction in which the airframe travels. It should be noted that the airframe front-rear direction DL and the airframe width direction DW are named for easy understanding, and may be independent of the traveling direction and the airframe shape. In this case, the airframe front-rear direction DL is a first direction extending parallel to the reference plane, and the airframe width direction DW is a second direction extending parallel to the reference plane and orthogonal to the first direction. In the present embodiment, the plurality of rotors 20 are arranged on each side of the fuselage region 1a in the airframe width direction DW. Specifically, in the multicopter 1, four rotors 20a to 20d aligned in the airframe front-rear direction DL are arranged on one side of the fuselage region 1a in the airframe width direction DW. In addition, the other four rotors 20e to 20h aligned in the airframe front-rear direction DL are arranged on the other side of the fuselage region 1a in the airframe width direction DW.

The support 10 includes a body frame 11 disposed in the fuselage region 1a and a rotor support frame 12 disposed in the rotor-side region 1b. The body frame 11 supports many parts except the rotor 20. The body frame 11 constitutes a strength member of the multicopter 1 and includes at least a portion constituting a framework. The body frame 11 supports a fuselage apparatus disposed in the fuselage region 1a. In other words, the body frame 11 defines a fuselage apparatus loading space S1 (see Fig. 2) in which the fuselage apparatus is loaded. For example, the fuselage apparatus includes each power generation unit 3 described above and a power supply apparatus for supplying the power generated by the power generation unit 3 to each motor 48. In the present embodiment, the body frame 11 may be formed in a basket shape formed by a plurality of pillars. In the present embodiment, a body housing 11a is fixed to the body frame 11, and a fuselage apparatus is disposed in an internal space of the body housing 11a.

The rotor support frame 12 is connected to the body frame 11, and has a portion protruding outward from the fuselage region 1a in a plan view. The rotor support frame 12 supports the motor 48 to which the rotor 20 is attached. The rotor support frame 12 transmits the lift generated by the rotation of each rotor 20 to the body frame 11. As a result, the entire multicopter 1 is configured to be able to fly together with the plurality of rotors 20. In the present embodiment, the rotor support frame 12 is formed in a ladder shape and includes a rotor support member 12a and a lateral frame 12b. A pair of the rotor support members 12a is disposed on the outer sides in the airframe width direction DW with respect to the body frame 11 and extends in the airframe front-rear direction DL. The pair of rotor support members 12a support respective two sets of four rotors 20a to 20d and 20e to 20h aligned in the airframe front-rear direction DL. The lateral frame 12b connects the pair of rotor support members 12a. Specifically, the lateral frame 12b extends in the airframe width direction DW to connect the pair of rotor support members 12a. The lateral frame 12b is connected to the body frame 11. In other words, each rotor support frame 12 is fixed to the body frame 11 through each lateral frame 12b. In the present embodiment, the fuselage apparatus loading space S1 is defined between the pair of lateral frames 12b in the airframe front-rear direction DL. In the present embodiment, the fuselage apparatus loading space S1 is arranged below the positions where the rotor blades of the plurality of rotors 20 are arranged.

In the present embodiment, the multicopter 1 includes a luggage room housing 13 that covers the luggage room S2 on which the load is loaded. The luggage room housing 13 is disposed in the fuselage region 1a and is supported by the body frame 11. In the flight state of the multicopter 1, the luggage room S2 is disposed at a position overlapping with the fuselage apparatus loading space S1 of the body frame 11 in the vertical direction as viewed in a plan view. Specifically, the luggage room S2 is disposed below the fuselage apparatus loading space S1. The luggage room S2 can protect the load from wind, rain, and the like by being covered by the luggage room housing 13. In addition, the luggage room S2 is formed with a wall for partitioning a space in the vertical direction between the luggage room S2 and the fuselage apparatus loading space S1. The luggage room S2 is positioned in a fuselage region 1a closer to the rear in the front-rear direction of the support 10.

In the present embodiment, the multicopter 1 includes an auxiliary room housing 15 that covers the auxiliary room S3 in which the auxiliary component is loaded, separately from the luggage room S2. The auxiliary room housing 15 is disposed in the fuselage region 1a and is supported by the body frame 11. In the flight state of the multicopter 1, the auxiliary room S3 is disposed at a position overlapping with the fuselage apparatus loading space S1 of the body frame 11 in the vertical direction in a plan view. Specifically, the auxiliary room S3 is disposed below the fuselage apparatus loading space S1. By forming the auxiliary room S3, a region where a component can be mounted can be expanded downward. The auxiliary room S3 can protect the auxiliary component from wind, rain, and the like by being covered by the auxiliary room housing 15. In addition, the auxiliary room S3 is formed with a wall for partitioning a space in the vertical direction between the auxiliary room S3 and the fuselage apparatus loading space S1. The auxiliary room S3 is disposed at a position shifted in the horizontal direction with respect to the luggage room S2. In the present embodiment, the auxiliary room S3 is positioned in a fuselage region closer to the front in the airframe front-rear direction. In other words, the auxiliary room S3 is aligned in the front-rear direction with respect to the luggage room S2, and is disposed in front of the luggage room S2 in the airframe front-rear direction DL. In the present embodiment, a capacitor 43 described below is housed in the auxiliary room S3. As described above, since the capacitor 43 is disposed away from the generator 47 and the engine 32, the influence due to heat from these components can be suppressed.

A landing gear 14 that comes into contact with the ground when the multicopter 1 is grounded is connected to the body frame 11. The landing gear 14 protrudes downward from the body frame 11. Since the landing gear 14 is formed, the multicopter 1 can stably stand by itself in a grounded state. In the present embodiment, the grounding portion of the landing gear 14 is formed to protrude more downwardly with respect to the fuselage apparatus loading space S1, the luggage room S2, and the auxiliary room S3. In other words, the fuselage apparatus loading space S1 and the luggage room S2 are disposed between the rotor blades of the plurality of rotors 20 and the grounding portion of the landing gear 14 in the vertical direction.

Each rotor 20 is disposed in the rotor-side region 1b. That is, each rotor 20 is positioned on each side in the airframe width direction DW of the body frame 11, and is disposed at a position not overlapping with the fuselage region 1a in a plan view. The rotors 20a to 20d are attached in alignment in the airframe front-rear direction DL to the rotor support member 12a on one side in the airframe width direction DW of the fuselage region 1a. The rotors 20e to 20h are attached in alignment in the airframe front-rear direction DL to the rotor support member 12a on the other side in the airframe width direction DW of the fuselage region 1a. In a plan view, the adjacent respective rotors 20 are arranged, at intervals, at positions shifted from each other in the airframe front-rear direction DL and the airframe width direction DW, that is, at positions not overlapping with each other.

Each rotor unit 2 includes a rotor 20 for providing thrust to the multicopter 1, a motor 48 as an electric motor that rotates a rotating shaft by being supplied with electric power, and an inverter 42 for applying drive power to the motor 48. Each rotor 20 is fixed to, for example, a rotor portion of the motor 48 with a bolt or the like. A stator portion of the motor 48 is fixed to the rotor support frame 12. This causes the motor 48 to rotate the rotor 20 around the rotation axis. Each motor 48 is fixed to the rotor support member 12a through the motor mounting member 25. In the present embodiment, each motor 48 is achieved by an AC motor. It should be noted that an inverter 42 constituting a part of each rotor unit 2 is disposed on the airframe front side in the fuselage region 1a.

As described above, the rotor unit 2 is provided with motors 48 corresponding to the respective rotors 20 and inverters 42 corresponding to the respective rotors. The controller 45 individually controls each of the motors 48 through a corresponding one of the inverters 42, whereby the rotor 20 can be individually rotation-controlled. As described above, the controller 45 can change the attitude angle by individually controlling each motor 48 to make the magnitude of the lift generated in each rotor 20 different. In this manner, the controller 45 can control the attitude during flight and the flight propulsion.

In the present embodiment, each rotor 20 is a fixed pitch type in which the pitch angle of the rotor blades is fixed. The multicopter 1 can be simplified in structure as compared with a case where the pitch angle is configured to be variable, and can achieve improvement in maintainability and weight reduction. In addition, by rotating the rotor 20 by the motor 48, the structure can be simplified as compared with a case of rotating the rotor 20 by the rotation of the engine 32, maintainability can be improved and weight can be reduced, and further, responsiveness until the rotor speed changes according to a control command by the controller 45 can be enhanced.

The multicopter 1 includes a rotor cover 23 that covers each rotor 20 from the radial outside of the rotating shaft. The rotor cover 23 can prevent an object from approaching a rotation region of the rotor 20. Furthermore, contact of an object with the rotor 20 can be prevented and the rotor 20 can also be protected. The rotor cover 23 is fixed to the rotor support member 12a. The rotor cover 23 is formed in a tubular shape opened in the vertical direction. In the present embodiment, in a plan view, the rotor cover 23 is formed in a substantially elongated hole shape that covers four sets of two rotors 20a and 20b, 20c and 20d, 20e and 20f, and 20g and 20h aligned in the airframe front-rear direction DL.

Each power generation unit 3 includes an engine 32 as an internal combustion engine and a generator 47 driven by the engine 32. In addition, each power generation unit 3 includes a converter 41 which is a primary power conversion apparatus that converts the power generated by the generator 47. In other words, the power generation unit 3 includes an internal combustion engine unit 30 including the engine 32, the generator 47, and the converter 41. It should be noted that the generator 47 and the converter 41 are one of the electrical equipments 40 (what is called power electrical equipments) for supplying driving electric power for supplying electric power for rotationally driving the rotor 20, and all the electrical equipments 40 are disposed on the airframe front side in the fuselage region 1a.

In the present embodiment, the multicopter 1 flies mainly by a driving force generated by engine driving. Specifically, the engine 32 rotates an engine output shaft by combustion of fuel. The engine 32 has an output shaft thereof connected to an input shaft of a generator 47 so as to be capable of transmitting power. The generator 47 converts mechanical rotational force into electric power by the input shaft being rotated by the engine 32. By being electrically connected to the generator 47, the converter 41 adjusts AC power supplied from the generator 47 and supplies power to the inverter 42 which is a secondary power conversion apparatus described below. The inverter 42 converts the DC power converted by the converter 41 into AC power suitable for driving the motor 48 and applies the AC power to the motor 48.

In the present embodiment, the multicopter 1 includes three power generation units 3. When power is transmitted from the engine 32 to the generator 47, a speed reducer (not shown) that reduces the engine speed of the power is interposed. Each power generation unit 3 is formed in the same structure. This makes it possible to prevent an increase in the number of component types and improve maintainability.

As shown in Fig. 1, the engine 32 constituting a part of each power generation unit 3 is disposed in a rear region in the airframe front-rear direction DL in the fuselage apparatus loading space S1. In the present embodiment, the region where the engine 32 is disposed is an upper region of the luggage room S2. Similarly to the engine 32, each generator 47 is arranged in a rear region in the airframe front-rear direction DL in the fuselage apparatus loading space S1. In addition, each generator 47 is disposed in the front portion in the airframe front-rear direction DL with respect to the engine 32 from which the power is transmitted.

The respective engines 32 are arranged side by side in the airframe width direction DW. Adjacent engines 32 of the respective engines 32 are disposed at positions shifted from each other in the airframe front-rear direction DL. Specifically, the engine 32 at the central portion in the airframe width' direction DW is disposed in the airframe-front with respect to the other engines 32 disposed outside in the airframe width direction DW. With this arrangement, it is possible to form a large gap around the adjacent engines 32 as compared with a case where the respective engines 32 are aligned and arranged in the airframe width direction DW. Accordingly, the movement of the surrounding air warmed by the combustion of the fuel of the engine 32 can be easily promoted. This make it possible to suppress the temperature rise of the air in the body housing 11a. In addition, by forming a large gap around the engine 32, maintainability of the engine 32 can be improved. For example, the rear end surface of the engine 32 at the central portion in the airframe width direction DW may be positioned in front of the front end surface of the adjacent engine 32. As a result, it is easy to access the engine 32 at the center in the airframe width direction DW from the airframe side, and it is possible to further prevent deterioration in maintainability of the engine 32.

In the present embodiment, each engine 32 is disposed so that the output axis a extends in the airframe width direction DW. As described above, since the adjacent engines 32 are arranged to be shifted in the airframe front-rear direction DL, the engines 32 can be also arranged to overlap each other in the airframe width direction DW, and it is possible to prevent an increase in size of the multicopter 1 in the airframe width direction DW.

On the front side in the airframe front-rear direction DL of each of the engines 32, a corresponding one of the generators 47 is disposed. Each of the generators 47 is connected to a corresponding one of the engines 32 through a chain which is a power transmission mechanism. In the present embodiment, a transmission is connected to an output shaft of the engine 32, and a revolving speed suitable for power generation of the generator 47 is achieved by deceleration by the transmission and the power transmission mechanism (sprocket). Similarly to the engines 32, each of the generators 47 are arranged side by side in the airframe width direction DW, and the adjacent generators 47 are arranged at positions shifted in the airframe front-rear direction DL. The engine 32 and the generator 47 corresponding to the engine 32 are configured to be aligned in the airframe front-rear direction DL. The generator 47 and the engine 32 may be directly connected.

Each engine 32 is connected with an exhaust pipe 33 for discharging exhaust generated by combustion into the atmosphere. The exhaust pipe 33 is connected to an exhaust port of each engine 32, and discharges exhaust rearward in the airframe front-rear direction DL of the engine 32. Specifically, the exhaust pipe 33 extends rearward in the traveling direction from the exhaust port of the engine 32. In the present embodiment, since the exhaust port of the engine 32 directs rearward in the airframe front-rear direction DL with respect to the engine main body, the exhaust pipe 33 can be easily disposed behind the engine 32. In addition, since the outlet portion of the exhaust pipe 33 is formed so as to protrude to the outside of the body housing 11a, it is possible to prevent the exhaust of the engine 32 from flowing into the body housing 11a. It should be noted that the exhaust pipe 33 preferably includes a muffler portion serving as a silencer, and the muffler portion is preferably disposed outside the body housing 11a. Accordingly, a temperature rise in the body housing 11a can be further prevented. In addition, it is preferable that the intake port of the engine 32 directs airframe-forward with respect to the engine main body. Accordingly, interference between the intake pipe that guides intake air to the engine 32 and the exhaust pipe 33 can be prevented. In addition, an air cleaner and an intake pipe for filtering intake air guided to the engine 32 are preferably disposed in airframe-front with respect to the engine 32. As a result, it is possible to guide intake air having a low temperature to the engine 32 while suppressing the influence due to exhaust air.

A fuel tank (not shown) serving as a fuel supply source to each engine 32 is disposed in front of each generator 47. Since each fuel tank is disposed in front of the engine, it is possible to make the fuel tank less susceptible to heat from the engine 32 and the exhaust pipe 33. Each fuel tank is connected to the engine 32 through a fuel tube (not shown).

The converter 41 constituting a part of the power generation unit 3 is disposed adjacent to the corresponding generator 47. Each converter 41 is disposed on the front side in the airframe front-rear direction DL in the fuselage region 1a, more specifically, in front in the airframe front-rear direction DL with respect to each generator 47. Accordingly, the electrical wiring harness that electrically connects the generator 47 and the converter 41 can be shortened. Similarly to the engines 32, the respective converters 41 are arranged side by side in the airframe width direction DW.

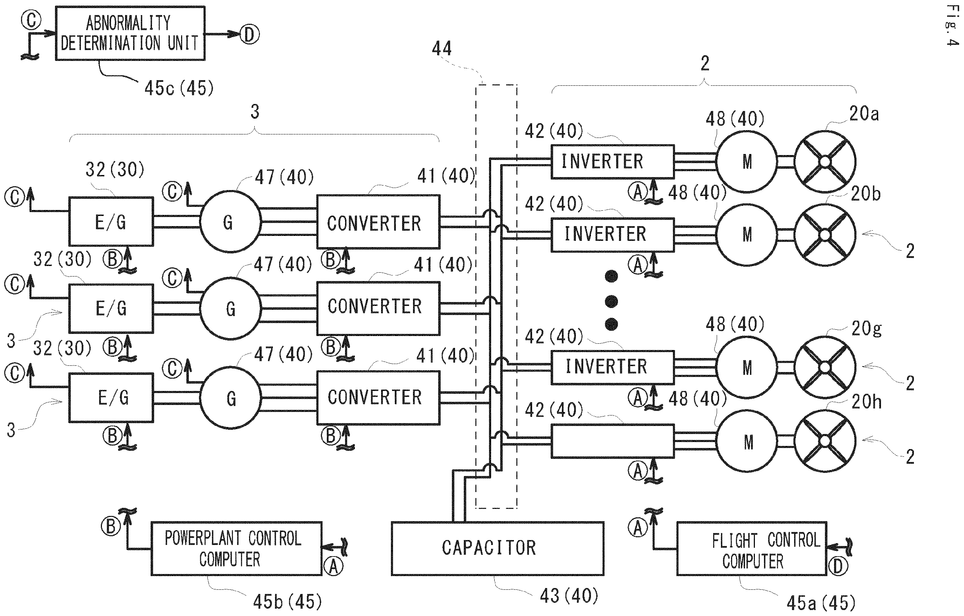

In the present embodiment, the power generated by the power generation unit 3 is supplied to the rotor unit 2 through the aggregated electric circuit 44 (Fig. 4). Specifically, as shown in Fig. 4, the respective converters 41 constituting some of the respective power generation units 3 are connected in parallel to the aggregated electric circuit 44. Accordingly, in the aggregated electric circuit 44, the power generated by each power generation unit 3 is aggregated. In addition, the respective inverters 42 constituting some of the respective rotor units 2 are connected in parallel to the aggregated electric circuit 44. Accordingly, the aggregated electric circuit 44 is configured to be able to supply the aggregated electric power to the respective rotor units 2. The capacitor 43 which is a power storage apparatus is electrically connected in series with the aggregated electric circuit 44 and electrically connected in parallel with the power generation unit 3. That is, the generator 47 and the capacitor 43 are connected in parallel to the aggregated electric circuit 44 that supplies power to the plurality of motors 48. Accordingly, the capacitor 43 is configured to be able to transfer power to and from the aggregated electric circuit 44, and can suppress the fluctuation in the output power supplied to the inverter 42 due to the output fluctuation of the engine. In addition, without depending on the control of the powerplant control computer 45b described below, the capacitor 43 discharges so as to prevent a voltage decrease when the voltage of the aggregated electric circuit 44 decreases, and charges power so as to prevent a voltage increase when the voltage increases. Accordingly, it is possible to respond to the instantaneous required power fluctuation associated with the attitude control and the like more quickly than the adjustment of the power generation amount by the powerplant control computer 45b without requiring special control. It should be noted that the revolving speed of the generator 47 is maintained constant, and thus the voltage to be generated is controlled to be constant. By changing the throttle opening changes the torque serving as the load (that is, changing the current to the generator 47), the power fluctuation is adjusted. That is, when the capacitor 43 is discharged to decrease the voltage and decrease the rotor speed, the throttle is opened to increase the power generation amount in order to compensate for the decrease. In addition, the power generation fluctuation caused by the engine pulsation can also be suppressed by using the capacitor 43.

The capacitor 43 is also referred to as a condenser, and has a structure in which charge is stored by a voltage being applied between conductors. In the present embodiment, the capacitor 43 is disposed at a position close to the aggregated electric circuit 44 and the inverter 42. Specifically, the capacitor 43, the aggregated electric circuit 44, and the inverter 42 are arranged adjacent to each other in the vertical direction. Accordingly, the electronic apparatus system can be compactly arranged, and the power in the capacitor 43 can be promptly supplied to each inverter 42.

As described above, the controller 45 includes a flight control computer 45a that controls the flight and the attitude of the multicopter 1 and a powerplant control computer 45b that controls the power supply to the motor 48. It should be noted that the flight control computer 45a and the powerplant control computer 45b are configured separately in the present embodiment, but may have an integrated structure.

The flight control computer 45a reads a flight control program stored in the storage unit, and calculates the motor speed of an individual motor 48 required so as to perform a flight and an attitude predetermined by a flight calculation unit on the basis of a position information and a gyro information obtained by a GPS and a gyro sensor (not shown). The flight control computer 45a controls an individual inverter 42 according to the calculation result. As this flight control program, a known program can be used.

The powerplant control computer 45b reads the power control program housed in the storage unit, and acquires the calculation result of the flight control computer 45a and information detected by various sensors provided in the power generation unit 3 and the like. The powerplant control computer 45b controls at least one of the engine 32 and the generator 47 to control the generated power in accordance with a control command from the flight control computer 45a. Specifically, the powerplant control computer 45b includes a power calculation unit that controls the engine 32 and the converter 41 so that the power supply amount to the motor 48 becomes appropriate. For example, the powerplant control computer 45b controls on the engine 32 to have a constant engine speed. In addition, the powerplant control computer 45b gives a power output command corresponding to the torque command of the motor 48 to the converter 41. In addition, the powerplant control computer 45b controls the power generation unit 3 (at least one of the engine 32 and the generator 47) so that the voltage of the aggregated electric circuit 44 falls within a predetermined range determined in advance. For example, the powerplant control computer 45b controls to increase the power generation amount when the voltage of the aggregated electric circuit 44 is lower than the predetermined value, and controls to decrease the power generation amount when the voltage of the aggregated electric circuit 44 is higher than the predetermined value.

The respective converters 41, the respective inverters 42, the flight control computer 45a, and the powerplant control computer 45b are disposed on the front side of the airframe in the fuselage region 1a, more specifically, in front in the airframe front-rear direction DL with respect to the respective generators 47. The capacitor 43 is housed in the auxiliary room housing 15. The electrical equipments 40 include power electrical equipments for driving a rotor (a generator, a converter, an inverter, a motor, and a capacitor) and light electronic components (control system electrical equipments including a sensor and a flight control computer for flight control). The engine 32 is disposed behind the electrical equipments 40. It should be noted that an electrical configuration in the multicopter 1 will be described below.

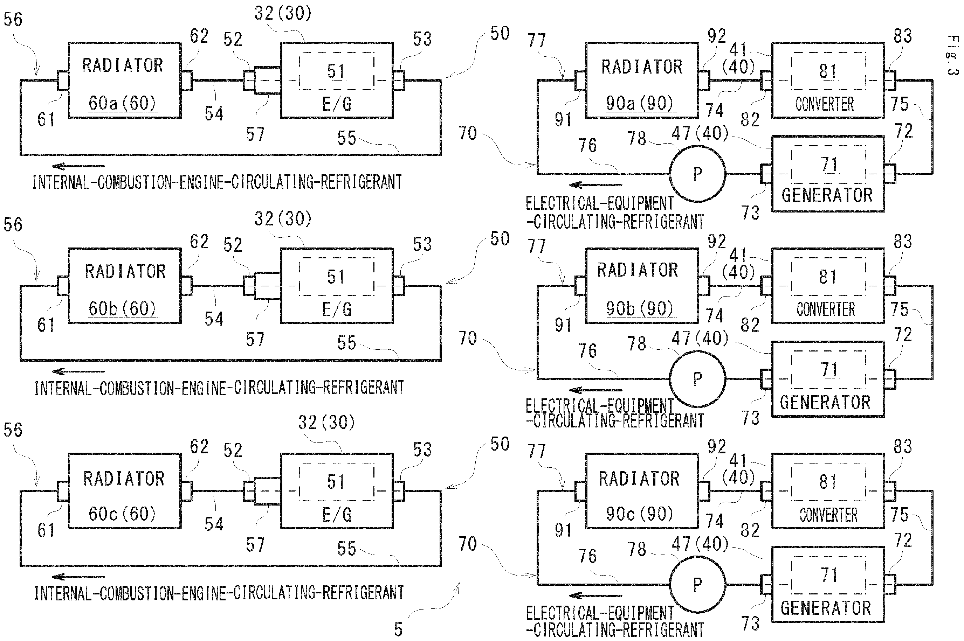

With reference to Fig. 3, here, a cooling structure of the multicopter 1 will be described. The multicopter 1 includes a cooling unit 5 for cooling the power generation unit 3. The cooling unit 5 of the present embodiment includes a cooling portion that draws heat from a heat generating portion provided in the multicopter 1 by the refrigerant, a heat dissipating portion that exchanges heat of the refrigerant that takes away heat with the atmosphere to dissipate heat, a refrigerant circulation passage that circulates the cooling medium over the cooling portion and the heat dissipating portion, and a pump for circulating the refrigerant in the circulation passage.

The cooling unit 5 includes, among the power generation units 3, an internal-combustion-engine-cooling-system 50 that cools the internal combustion engine units 30 and an electrical-equipment-cooling-system70 that cools the electrical equipments 40. The internal-combustion-engine-cooling-system 50 is individually provided for each internal combustion engine unit 30. In the present embodiment, since one internal combustion engine unit 30 is provided for each of the three power generation units 3, three internal-combustion-engine-cooling-systems 50 are provided. The electrical-equipment-cooling-system 70 is individually provided for each power generating system electrical equipment 40 including the generator 47 and the converter 41. In the present embodiment, since one power generating system electrical equipment 40 is provided for each of the three power generation units 3, three electrical-equipment-cooling-systems 70 are provided.

The internal-combustion-engine-cooling-system 50 includes an engine-radiator 60 constituting a heat dissipation portion. The electrical-equipment-cooling-system 70 includes an electrical-equipment-radiator 90 constituting a heat dissipation portion. Each of the radiators 60 and 90 is a heat exchanger, and dissipates heat of the refrigerant and lowers the temperature of the refrigerant by causing heat exchange between the built-in refrigerant and the surrounding atmosphere.

Each of the radiators 60 and 90 is individually provided every three internal-combustion-engine-cooling-systems 50 and three electrical-equipment-cooling-systems 70. In the present embodiment, three engine-radiators 60a to 60c corresponding to the three respective internal-combustion-engine-cooling-systems 50, and three electrical-equipment-radiators 90a to 90c corresponding to the three respective electrical-equipment-cooling-systems 70, are provided.

In the internal-combustion-engine-cooling-system 50, an engine cooling system 51 that takes away heat of a heat generating portion of the engine 32 by the refrigerant is formed. The engine cooling system 51 is formed as a refrigerant storage space adjacent to a heat generating portion of the engine 32. For example, the engine cooling system 51 is formed in the cylinder head and is formed around the intake/exhaust port, the spark plug housing space, and the cylinder upper space. In addition, the engine cooling system 51 is formed around the cylinder space of the cylinder block. In addition, the engine cooling system 51 is formed adjacent to the internal space of the crankcase. The engine cooling system 51 may be formed as a lubricating liquid heat exchange section that exchanges heat between a lubricating liquid flowing in the engine 32 and a cooling medium.

The engine 32 is formed with an engine inlet 52 for introducing a circulating refrigerant (internal-combustion-engine-circulating-refrigerant) cooled by each engine-radiator 60 into the engine cooling system 51, and an engine outlet 53 for discharging the circulating refrigerant that has taken away heat from a heat generating portion of the engine 32. The engine-radiator 60 is formed with a radiator inlet 61 for introducing a circulating refrigerant that has taken away heat of the engine 32, and a radiator outlet 62 for discharging the circulating refrigerant cooled by the radiator 60.

The internal-combustion-engine-cooling-system 50 includes an engine inlet pipe 54 that connects the radiator outlet 62 and the engine inlet 52, and an engine outlet pipe 55 that connects the engine outlet 53 and the radiator inlet 61. The engine-radiator 60, the engine 32, and the pipes 54 and 55 constitute an engine circulation path 56 through which the internal-combustion-engine-circulating-refrigerant circulates. In addition, the internal-combustion-engine-cooling-system 50 is provided with a pump 57 for circulating the circulating refrigerant in the engine circulation path 56. In the present embodiment, as the pump 57, a mechanically-driven pump driven by receiving a part of the rotational power of the engine 32 may be used.

Accordingly, the pump 57 and the engine 32 can be integrated, and a circulation amount (pump discharge amount) corresponding to the engine speed can be achieved. In addition, by cooling the lubricating liquid with the circulating refrigerant, a portion that generates heat such as a sliding portion can also be suitably cooled. In the present embodiment, the engine-radiator 60 is positioned in the rotor-side region 1b, and is provided at a position away from the fuselage region 1a where the engine 32 is provided.

In the electrical-equipment-cooling system 70, a generator cooling system 71 and a converter cooling system 81 that take away heat of the generator 47 and a heat generating portion of the corresponding converter 41 by the refrigerant are formed. The generator cooling system 71 is formed as a refrigerant storage space adjacent to the heat generating portion of the generator 47. For example, the generator cooling system 71 is formed around the power generating coil. In addition, the converter cooling system 81 is formed around the corresponding converter 41. The generator cooling system 71 may be formed as a lubricating liquid heat exchange section that exchanges heat between a lubricating liquid flowing in the generator 47 and a cooling medium.

The generator 47 is formed with a generator inlet 72 for introducing the circulating refrigerant (electrical-equipment-circulating-refrigerant) cooled by each electrical-equipment-radiator 90 into the generator cooling system 71, and a generator outlet 73 for discharging the circulating refrigerant that has taken away heat from the heat generating portion. The converter 41 is formed with a converter inlet 82 for introducing the circulating refrigerant (electrical-equipment-circulating-refrigerant) cooled by each electrical-equipment-radiator 90 into the converter cooling system 81, and a converter outlet 83 for discharging the circulating refrigerant that has taken away heat from the heat generating portion. The electrical-equipment-radiator 90 is formed with a radiator inlet 91 for introducing the circulating refrigerant that has taken away heat from the generator 47 and the converter 41, and a radiator outlet 92 for discharging the circulating refrigerant cooled by the electrical-equipment-radiator 90. The electrical-equipment-cooling-system 70 includes a converter inlet pipe 74 that connects the radiator outlet 92 and the converter inlet 82, a generator inlet pipe 75 that connects the converter outlet 83 and the generator inlet 72, and an electric outlet pipe 76 that connects the generator outlet 73 and the radiator inlet 91. That is, in the present embodiment, in the electrical-equipment-cooling-system 70, the converter 41 and the generator 47 are connected in series.

The electrical-equipment-radiator 90, the generator 47, the converter 41, and the pipes 74 to 76 constitute an electric circulation path 77 through which the electrical-equipment-circulating-refrigerant circulates. In addition, the electrical-equipment-cooling-system 70 is provided with a pump 78 for circulating the refrigerant in the electric circulation path 77. In the present embodiment, an electric pump driven by electric power supplied from the aggregated electric circuit 44 may be used as the pump 78. Accordingly, a dedicated power storage apparatus for supplying electric power to the pump 78 is unnecessary, and the number of parts can be reduced. In addition, by cooling the lubricating liquid with the electrical-equipment-circulating-refrigerant, a portion that generates heat such as a sliding portion of the generator 47 can also be suitably cooled.

In the present embodiment, the electrical-equipment-radiator 90 is positioned in the rotor-side region 1b, and is provided at a position away from the fuselage region 1a where the generator 47 and the converter 41 are provided. In the present embodiment, the electrical-equipment-cooling-system 70 cools the converter 41 and the generator 47 being electrical equipments for supplying power, but may cool the inverter 42 and the motor 48 being other electrical equipments for supplying power. In addition, another cooling apparatus for cooling the inverter 42 and the motor 48 may be provided.

It should be noted that each internal-combustion-engine-cooling-system 50 and the electrical-equipment-cooling-system 70 are preferably provided with a reservoir tank for releasing the refrigerant having a pressure equal to or higher than a specified value due to the influence due to the heat of each cooling target.

As shown in Fig. 1, each of the radiators 60 and 90 is arranged at a position symmetric in the airframe width direction DW. The respective engine-radiators 60a to 60c are disposed below the rotors 20 correspondingly to the rotors 20d, 20g, and 20h, and the respective electrical-equipment-radiators 90a to 90c are disposed below the rotors 20 correspondingly to the rotors 20b, 20f, and 20c. Each of the radiators 60 and 90 is supported by the rotor support frame 12.

Specifically, as shown in Fig. 1, each of the radiators 60 and 90 is fixed to both the rotor support member 12a and the lateral frame 12b. Specifically, one side of each of the radiators 60 and 90 formed in a substantially rectangular shape is fixed to the rotor support member 12a. In addition, the other side of each of the radiators 60 and 90 is supported by the lateral frame 12b. By supporting each of the radiators 60 and 90 on the two sides in this manner, the support rigidity of each of the radiators 60 and 90 can be easily increased.

Each of the radiators 60 and 90 is disposed at a position shifted from the motor 48 of each rotor unit 2 in a plan view, that is, at a position not overlapping with the motor 48. Each of the radiators 60 and 90 is disposed in a region where the airflow guided by the rotor 20 flows. For example, each of the radiators 60 and 90 is disposed at a position overlapping with the rotation region of the rotor blade of the rotor 20 in a plan view. In the present embodiment, each of the radiators 60 and 90 is disposed at a position below the rotor blades of the rotor 20. Accordingly, in the flight state, each of the radiators 60 and 90 can promote heat exchange by the downward airflow generated by the rotation of each rotor 20, and heat dissipation performance can be improved.

The electrical-equipment-cooling-system 70 is configured to cool the electrical equipment 40 having a smaller heating value than the internal combustion engine unit 30. Here, the internal-combustion-engine-cooling-system 50 and the electrical-equipment-cooling-system 70 are configured as separate circuits independent of each other. Accordingly, a cooling temperature suitable for each of the internal-combustion-engine-cooling-systems 50 and the electric cooling sections 70 is achieved. In the present embodiment, the temperature of the electrical-equipment-circulating-refrigerant circulating in the electric cooling section 70 (referred to as electric cooling temperature) is set to be different from the temperature of the internal-combustion-engine-circulating-refrigerant circulating in the internal-combustion-engine-cooling-system 50 (referred to as internal combustion engine cooling temperature). Specifically, the electric cooling temperature is lower than the internal combustion engine cooling temperature.

The temperatures of the electrical-equipment-circulating-refrigerant and the internal-combustion-engine-circulating-refrigerant can be appropriately set by adjusting the cooling performance by each of the electric cooling sections 70 and the internal-combustion-engine-cooling-systems 50. For example, the temperature of the cooling water can be appropriately set according to the member to be cooled by setting the flow rate of the circulating refrigerant, the size (heat dissipation performance) of each of the radiators 60 and 90, and/or the valve opening temperature of a thermostat (not shown) provided in each of the electric cooling sections 70 and the internal-combustion-engine-cooling-systems 50.

In the above configuration, the multicopter 1 may be, for example, a large one having a total length of 5 m or more and a loadable amount of 100 kg or more. In addition, all of the rotors 20a to 21h have the same size, and have a diameter of, for example, 1.3 m or more.

With reference to Fig. 4, next, an electrical configuration of the multicopter 1 will be described.

As described above, in the present embodiment, the multicopter 1 includes a capacitor 43. For example, when the sum of the power supplied to the rotor unit 2 is temporarily larger than the sum of the power generated by the respective power generation units 3, the multicopter 1 supplies power from the capacitor 43 to the rotor unit 2. In addition, when the sum of the power generated by the respective power generation units 3 is temporarily larger than the sum of the power supplied to the rotor unit 2, the multicopter 1 recharges the capacitor 43.

In the multicopter 1 of the present embodiment, three power generation units 3 are connected in parallel to the aggregated electric circuit 44. In addition, eight rotor units 2 are connected in parallel to the aggregated electric circuit 44.

In each power generation unit 3, a corresponding engine 32 is mechanically connected in a power transmittable manner to a corresponding generator 47. The power generation units 3 cause the respective engines 32 to drive the generators 47 to generate AC power. The pieces of AC power generated by the respective generators 47 are converted into pieces of DC power through the corresponding converters 41. The pieces of power converted into the DC by the respective converters 41 are aggregated by the aggregated electric circuit 44 and then supplied to the respective inverters 42.

The pieces of DC power supplied to the respective inverters 42 are converted into pieces of three-phase AC power and the pieces of three-phase AC power are supplied to the corresponding motors 48. In the present embodiment, an electrical component that adjusts the power supplied from each generator 47 to each motor 48 in this manner is referred to as a power adjustment circuit. Specifically, the power adjustment circuit refers to each converter 41, the aggregated electric circuit 44, and each inverter 42.

As described above, each motor 48 is mechanically connected in a power transmittable manner to a corresponding one rotor 20. When the respective motors 48 receive electric power and are driven, the corresponding rotors 20a to 20h are driven.

In addition, the capacitor 43 is electrically connected to the aggregated electric circuit 44, and the capacitor 43 first responds to power requests from the motors 48. When the voltage of the aggregated electric circuit 44 decreases due to the power supply to the rotor units 2, the power generation units 3 are controlled to increase the power generation amount and keep the voltage constant at the target value. In contrast, when surplus power is generated, since the voltage of the aggregated electric circuit 44 increases, the power generation units 3 are controlled to reduce the power generation amount and keep the voltage constant at the target value. As described above, without depending on the control of the powerplant control computer 45b, the capacitor 43 discharges so as to prevent a voltage decrease when the voltage of the aggregated electric circuit 44 decreases, and charges power so as to prevent a voltage increase when the voltage increases. Accordingly, it is possible to respond to the instantaneous required power fluctuation associated with the attitude control and the like more quickly than the adjustment of the power generation amount by the powerplant control computer 45b without requiring special control.

In the present embodiment, in order to control the above-described electrical configuration, the controller 45 including the flight control computer 45a and the powerplant control computer 45b is provided.

The powerplant control computer 45b controls each engine 32 and each converter 41 so that the voltage of the aggregated electric circuit 44 is maintained at a predetermined value. For example, the powerplant control computer 45b operates the torque commands of the converters 41 so as to maintain the engine speeds of the respective engines 32 within a certain range and to maintain the voltage of the aggregated electric circuit 44 at a constant value. This enables stable flight of the multicopter 1, and suppresses overcharge and overdischarge of the capacitor 43 as well. In addition, by controlling the powerplant control computer 45b so that when the voltage of the aggregated electric circuit 44 is lower than the voltage of the capacitor 43, discharge from the capacitor 43 is executed, and when the voltage of the aggregated electric circuit 44 is higher than the voltage of the capacitor 43, charging of the capacitor 43 is executed, the power supply after being compensated by the capacitor 43 can be borne by the generator 47.

The flight control computer 45a controls the rotor speed of each rotor 20 for attitude control of the multicopter 1. Specifically, the flight control computer 45a individually controls the respective inverters 42 in order to control the rotor speeds of the rotors 20a to 20h. Accordingly, the multicopter 1 can perform a flight operation required in a stable attitude.

Specifically, in order to perform the requested flight operation, the flight control computer 45a calculates the rotor speed required for each rotor 20 according to the requested flight operation, and outputs the rotor speed command to the powerplant control computer 45b. On the other hand, the powerplant control computer 45b outputs an accelerator opening command necessary for keeping the engine speed of the engine 32 constant to the engine 32, and outputs a torque command to the converter 41 to control the power generation amount.

In the adjustment of the power generation amount as described above, since the time delay from when the flight control computer 45a issues the rotor speed command to when each power generation unit 3 completes the response is dominated by the response speed of the engine 32, the response speed is slow. Therefore, when the capacitor 43 is not provided, the output response due to the power generation is not in time under the attitude control in which a response for a significantly short time, such as to maintain the attitude in a disturbance such as wind, is required, and the control may be lost.

The multicopter 1 of the present embodiment is provided with the capacitor 43 as described above. The capacitor 43 can instantaneously discharge a large current. To that end, the capacitor 43 first responds supplementarily to the instantaneous power demand for attitude control, and compensates for the delay of the output response of the engine 32. For example, when an instantaneous increase in the output of the motor 48 is required due to a disturbance state such as a gust of wind, the capacitor 43 immediately starts supplying power to the aggregated electric circuit 44 to compensate for the response delay of each power generation unit 3.

The capacitor 43 has capacitance necessary for suppressing the fluctuation of the required power due to the short-time response of the motors 48. That is, the capacitor 43 is provided so as to have capacitance capable of compensating for the power necessary for the attitude control of the airframe from when the engine 32 receives the output change command to when the output is changed. Accordingly, the power shortage caused by the output change by the engine 32 can be compensated by the capacitor 43. Specifically, the capacitance of the capacitor 43 may be 100 Wh or more and 1000 Wh or less in terms of power amount. This minimum capacitance corresponds to a case where the voltage fluctuation allowable range of the converter 41 is maximally used, and flight is enabled with standard load fluctuation (standard flight conditions). This maximum capacitance corresponds to a case where the flight can withstand even with larger load fluctuation (strict flight conditions) while having an appropriate margin for the voltage fluctuation allowable range of the converter 41. It should be noted that the capacitance range of the capacitor 43 is not limited to the above-described range, and can be appropriately changed according to the airframe weight, the inertia moment of the airframe, the flight conditions, the margin, and the like.

According to the above configuration, the engine 32 having a power density (kw/kg) several times higher than that of a lithium ion battery is used as a main power source, and the capacitor 43 capable of instantaneously discharging a large current as compared with a battery is used as an auxiliary power storage apparatus, so that the entire power unit can be reduced in size and weight. Here, the power unit refers to a power generation apparatus (the engine 32 and the generator 47) and a power storage apparatus (the capacitor 43). In addition, in the attitude control of the airframe, even when a power demand difference is instantaneously generated due to a response delay of the internal combustion engine, excess or deficiency fluctuation of the supply power to the plurality of motors 48 can be absorbed by the capacitor 43. Furthermore, the capacitor 43 only needs to have sufficient capacitance to compensate for the response delay of the engine 32, and an increase in size of the power storage apparatus can also be prevented. In this manner, the multicopter 1 that can withstand long-time flight while preventing an increase in size and weight of the power unit is achieved.

Next, the flight mode of the multicopter 1 will be described.

A plurality of flight modes switchable during flight is set in the multicopter 1 of the present embodiment. In the plurality of flight modes, for example, as the flight modes, a normal flight mode when all of the power generation units 3 and the rotor units 2 operate normally, and an abnormal flight mode when one of the three power generation units 3, or eight rotor units 2, operate abnormally are set. Each of these flight modes is set according to the output range of the engine 32. That is, each of these flight modes is set so that each of the output ranges for maintaining the output of the engine 32 within a certain range is different from each other. Since the output range is different for each flight mode, it is easy to secure an output appropriate for each flight mode by switching the output for each flight mode.

In addition, in order to determine the abnormality of the above-described power generation unit 3, the controller 45 includes an abnormality determination unit 45c (see Fig. 4). When detecting the abnormality of each power generation unit 3 or each rotor unit 2, the abnormality determination unit 45c transmits information on detecting the abnormality to the powerplant control computer 45b or the flight control computer 45a. For example, the abnormal state may be determined by a sensor provided in the engine 32. For example, when the temperature of the cooling water (refrigerant) exceeds a predetermined range, or when a known abnormal state such as a control abnormality of the engine speed of the engine 32, an operation abnormality of the injector and the throttle controller, or an abnormality of the fuel supply apparatus is determined, it may be determined as an abnormality of the engine 32. In addition, the abnormal state may be determined when individual electrical characteristic values (current, voltage, resistor, short circuit, disconnection, and the like) of the power generation unit 3 exceed a predetermined range.

When receiving information on detecting an abnormality from the abnormality determination unit 45c in a state of performing control in the normal flight mode at the time of normality, the powerplant control computer 45b, the flight control computer 45a, or both are switched from the normal flight mode to the abnormal flight mode. It should be noted that the abnormality determination method by the abnormality determination unit 45c can be any mode.

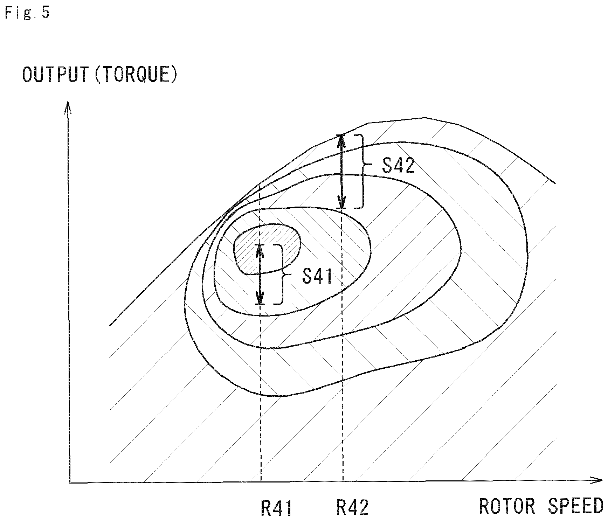

With reference to Fig. 5, the normal flight mode and the abnormal flight mode will be described.

In the graph in Fig. 5, the horizontal axis represents the engine speed of the engine 32, and the vertical axis represents the output (torque or load) of the engine 32. An upwardly protruding arched curved line in the graph indicates the maximum output of the engine 32 at each rotational speed. That is, the curved line indicates a state in which the output of the engine 32 is 100%.

The engine 32 of the present embodiment has the following characteristics. The output of the engine 32 gradually increases as the engine speed increases and approaches a predetermined peak engine speed. In the engine 32, the output becomes the maximum value when the engine speed reaches the peak engine speed, and the output gradually decreases when the engine speed exceeds the output maximum engine speed. The fuel consumption is distributed in a stripe shape (contour line shape), and the fuel consumption deteriorates as the engine speed and output are away from a region where the fuel consumption is good (stripe-shaped central portion, region having high oblique line density). The output (load or torque) is set within a certain range as a characteristic of the generator 47.

In Fig. 5, a reference output range S41 is set to an output range corresponding to the normal flight mode. The maximum value of the reference output range S41 needs to be equal to or larger than the maximum value of the output required in all flight states including the disturbance in the normal flight mode. In addition, a high output range S42 is set to an output range corresponding to the abnormal flight mode. The powerplant control computer 45b controls so as to keep the engine speed of the engine 32 constant, but when an abnormality is detected, the powerplant control computer 45b can switch the control engine speed of the engine 32 at which no abnormality is detected from the reference engine speed R41 to the high output engine speed R42.

The reference engine speed R41 is an engine speed at which the fuel consumption is near the maximum. The reference engine speed R41 is set to be, for example, 60% or more and less than 85% of the maximum engine speed.

The high output engine speed R42 is a engine speed at which the engine speed of the engine 32 is larger than the reference engine speed R41 (R42 > R41). When detecting an abnormality, the powerplant control computer 45b secures high output by switching the control engine speed of the engine 32 at which no abnormality is detected from the reference engine speed R41 to the high output engine speed R42. In addition, even when there is no abnormality, the engine speed may be switched to the high output engine speed R42 in a flight requiring high output such as a flight at a high altitude.

In the normal flight mode, each engine 32 is driven at the reference engine speed R41. In the abnormal flight mode, those not determined to be abnormal of the respective engines 32 are driven at the high output engine speed R42. In addition, those determined to be abnormal of the respective engines 32 (the respective generators 47) are caused to stop driving as the power generation units 3. In this way, it is possible to select the flight mode in the reference output range S41 in which fuel consumption is prioritized and the flight mode in the high output range S42 in which high output is required, and it is possible to easily fly according to the situation.

Preferably, in the abnormal state and the non-abnormal state, the total amount of power supplied from the power generation unit 3 to the aggregated electric circuit 44 is controlled to be in the same range. For example, when n power generation units 3 are provided, let the corresponding one output by each power generation unit 3 in the normal mode be X, and assuming that m power generation units 3 are determined to have failed, it is preferable that, in the abnormal mode, the corresponding one abnormal-time output Y by each power generation unit 3 not determined to be abnormal is (n . X)/(n - m). The abnormal-time output Y may be a value in which an allowable range allowable in each electrical equipment 40 is taken into consideration. Accordingly, the generated power in the abnormal state can be equal to or close to the generated power before the abnormality, and the decrease in the output in the abnormal state can be suppressed. For example, when three power generation units 3 are mounted and one power generation unit 3 is determined to be in failure, in the failure mode, it is preferable that the power generation unit 3 not determined as in failure is set to have an output 1.5 times that in the normal mode.

According to the present embodiment, when an abnormality is detected in at least one power generation unit 3 among the power generation units 3, the other power generation units 3 generate power with a higher output than that in the normal state. This makes it possible to suppress a decrease in power in an abnormal state. Accordingly, a problem such that power of the multicopter 1 decreases can be avoided, and the reliability of the multicopter 1 can be improved. In addition, since in the normal flight mode, the output of the engine 32 can be made lower than the output in the abnormal flight mode, the load on the engine 32 can be reduced. In the present embodiment, it has been exemplified that the output in the abnormal state is made different by making the engine speed region of the engine 32 different.

### (Modification)

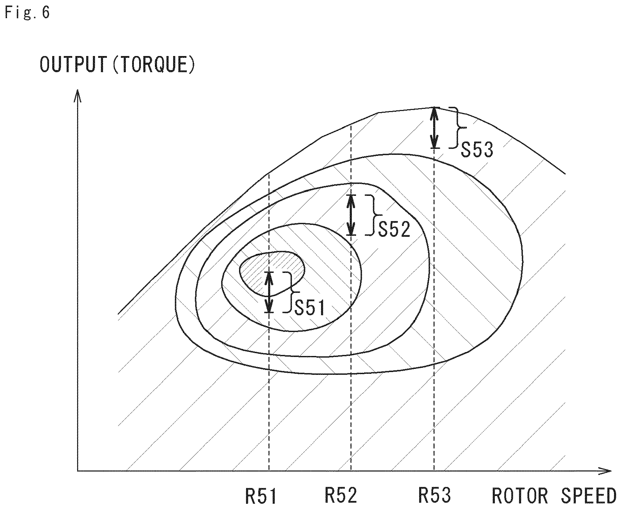

As a modification, a flight mode different from that of the above embodiment may be set. For example, three output ranges corresponding to the flight mode may be set. Specifically, referring to Fig. 6, an output range S51 corresponding to a cruise flight mode, an output range S52 corresponding to a hovering flight mode, and an output range S53 corresponding to an abnormal flight mode may be set. Here, the cruise flight mode is a mode in which propulsion flight is performed. The hovering flight mode is a mode in which hovering is performed while staying still in the air without performing propulsion. In the present modification, the cruise flight mode and the hovering flight mode correspond to the normal flight mode when all of the power generation units 3 operate normally.

In general, cruise flight requires less output than hovering flight because lift is available. Therefore, the output range S51 in the cruise flight mode is lower than the output range S52 in the hovering flight mode. That is, the output range S51 used for the cruise flight is the reference output range, and the output range S52 used for the hovering flight is the high output range. When the engine speed of the engine 32 is the high output engine speed R52 during cruise flight, the output is controlled by narrowing the throttle. However, in general, the larger the throttle opening, the better the fuel consumption. Therefore, the fuel consumption can be improved by lowering the engine speed of the engine 32 to the reference engine speed R41 and making the throttle opening range the same. Furthermore, by lowering the engine speed in this manner, the load on the engine 32 can be reduced, and durability can be also improved. As described above, by dividing the output range to be used according to the flight mode, it is possible to achieve both the output and the fuel consumption and to perform the high fuel consumption operation. In addition, even when the engine speed of the engine 32 is changed, the voltage is maintained by the function of the converter 41. Accordingly, the engine 32 does not always maintain a constant engine speed, but can change the engine speed as necessary. It should be noted that the response delay caused by the switching of the flight mode can be compensated by the capacitor 43 as described above.

In the example in Fig. 6, in the magnitude relationship among the respective output ranges S51, S52, and S53, the output range S51 is the lowest, the output range S52 is the second lowest, and the output range S53 is the highest (S53 > S52 > S51). In addition, the engine speeds corresponding to the output ranges S51, S52, and S53 are set to R51, R52, and R53, respectively. In the magnitude relationship among the engine speeds R51, R52, and R53, the engine speed R51 is the smallest, the engine speed R52 is the second smallest, and the engine speed R53 is the largest (R53 > R52 > R51).

According to the present modification, durability can be improved by suitably switching the engine speed between in the cruise flight mode and in the hovering flight mode, and a decrease in output as the multicopter 1 can be suppressed even when an abnormality occurs in any one of the power generation units 3 by providing the abnormal flight mode.

As described above, three or more flight modes may be set. For example, as another flight mode example, an additional flight mode may be set depending on the presence or absence of the payload. For example, the flight mode may be made different between the cruise state without payload and the cruise state with payload. For example, in the hovering state without payload, the output for each power generation unit may be set to the same extent as in the cruise state with payload.

The multicopter 1 according to the above embodiment has the following effects.

Since the power supply state can be maintained by generating power due to the internal combustion engine 32, it is possible to prevent an increase in size of the power storage apparatus that stores electricity even in a long-term flight. In addition, since an internal combustion engine having an output weight ratio higher than that of a lithium ion battery is used as a main power source, a multicopter can fly for a long time. Furthermore, by including a plurality of the internal combustion engines 32 or the generators 47, even if an abnormality occurs in some drive apparatuses of the internal combustion engine 32 and the generator 47 during a long-term flight, the power supply state can be maintained by the remaining drive apparatuses. As described above, in the internal combustion engine 32 and the generator 47, since the drive state is easily maintained even when there is an abnormality, the reliability of the multicopter 1 as a whole can be improved.

Since the respective internal combustion engines 32 and generators 47 are provided correspondingly, even when an abnormality occurs in an internal combustion engine 32 and a generator 47, the power supply state can be maintained by the remaining internal combustion engines 32 and generators 47. Therefore, the durability of both the internal combustion engines 32 and the generators 47 is prevented from being excessive, and the multicopter 1 as a whole can withstand a long-time flight.

The electric power generated by each generator 47 is aggregated by the aggregated electric circuit 44 and supplied to the plurality of electric motors 48. By driving the plurality of electric motors 48 with the aggregated electric power, even when the output fluctuates for each generator 47, it is easy to stabilize the electric power supply to the electric motor 48 by suppressing the fluctuation of the electric power supply to the electric motor 48. Accordingly, when an abnormality occurs, the influence on the rotation of the rotor 20 can be suppressed.

When it is determined that the abnormality occurs in at least one of the plurality of power generation units 3, the influence due to the decrease in the power supplied to the electric motor 48 can be suppressed by operating the other power generation units 3 at a high output. For example, it is possible to suppress a decrease in the output of the multicopter 1 in the abnormality determination state.

During normal flight in which no abnormality has occurred, since the output of the power generation unit 3 can be suppressed to the reference output lower than the abnormal-time output, decrease in durability of the power generation unit 3 can be suppressed due to lowering of the load of the power generation unit 3.

During normal flight, the output of the internal combustion engine 32 is lower than the abnormal-time output, and the internal combustion engine 32 can be operated in a range with good fuel consumption, and the flyable navigation distance can be extended. In addition, it is possible to suppress a decrease in power performance of the multicopter in the abnormal determination state by increasing the output during the abnormal flight as compared with that during the normal flight. In this way, it is possible to achieve both extension of the navigation distance at the normal time and suppression of decrease in power performance at the abnormal time.

The controller 45 controls to stop the driving of the power generation unit 3 in which the abnormality determination unit 45c determines that an abnormality occurs. Accordingly, it is possible to prevent the progress and deterioration of the abnormal state. For example, by stopping driving by early abnormality determination, it is easy to maintain the abnormality in a slightly damaged state. For example, recovery to a normal state by repair can be accelerated.

Power can be supplementarily supplied by the capacitor 43 in a transition period until the output of the power generation unit 3 is raised from the reference output to the high output. Therefore, the capacitor 43 can compensate for the response delay of the power generation of the generator 47 associated with the output change of the internal combustion engine 32. Therefore, it is possible to stabilize the power supply in the transient state in which the output of the internal combustion engine 32 is changed. In particular, since performing discharge by an electrostatic effect, the capacitor 43 can discharge a large current as compared with discharge by a chemical reaction. Therefore, the capacitor 43 can cope with an instantaneous power demand in a relatively small shape.

During cruise flight, since an airflow flowing from the front to the rear is generated, the air around the internal combustion engine 32 heated by the internal combustion engine 32 is prevented from going toward the electrical equipment 40. Accordingly, it is possible to suppress a temperature rise caused by the internal combustion engine 32 on the electrical equipment 40 while using the internal combustion engine 32 as a main power source.

During cruise flight, exhaust gas from the internal combustion engine 32 can be discharged along an airflow flowing from the front to the rear. Accordingly, the exhaust can be promoted, and the exhaust gas can be prevented from going toward apparatuses and the like disposed in front of the internal combustion engine 32.

The air around the internal combustion engine 32 heated by the internal combustion engine 32 flows upward along with the temperature rise. In the present configuration, since the luggage room S2 is disposed below the internal combustion engine 32, the heated air around the internal combustion engine 32 easily moves in a direction away from the luggage room S2. Accordingly, it is possible to prevent a temperature rise caused by the internal combustion engine 32 on the luggage room S2 while using the internal combustion engine 32 as a main power source.

As described above, in the present embodiment and the modification, since each engine 32 serving as a heat source is disposed behind in the traveling direction the electrical equipment 40 for which measures against heat are desirable, it is possible to suppress heat damage to the electrical equipment 40 by the engine 32 without providing a partition wall or the like for protecting the electrical equipment 40 from heat damage.

As described above, by including the plurality of internal-combustion-engine-cooling-systems 50, even when one internal-combustion-engine-cooling-system 50 fails, another internal-combustion-engine-cooling-system 50 can maintain the cooling of another engine 32 corresponding to the other internal-combustion-engine-cooling-system 50, and the operation of the other engine 32 can be continued. Accordingly, it is possible to suppress the influence due to the stop of the engine 32 according to the failure of the internal-combustion-engine-cooling-system 50.

By including the plurality of electric cooling sections 70, even when one electric cooling section 70 fails, another electric cooling section 70 can maintain the cooling of another generator 47 and converter 41 corresponding to the other electric cooling section 70, and the operations of the other generator 47 and converter 41 can be continued. Accordingly, it is possible to suppress the influence due to the stop of the generator 47 and the converter 41 corresponding to the failure of the electric cooling section 70.

Moreover, a generator 47 and a converter 41 corresponding thereto are connected to the electric cooling section 70. Therefore, since each electric cooling section 70 includes a complete set of electrical equipments, and moreover, the corresponding generator 47 and converter 41, the generated electric power is easily maintained.

As described above, although the specific embodiment of the present invention is described, the present invention is not limited to the above-described embodiment, and can be implemented with various modifications within the scope of the present invention.

For example, the capacitor 43 may be replaced with a small-capacity power storage apparatus having various capacitor functions, such as a lithium ion capacitor battery. Also in this case, similarly to the above embodiment, there is provided a discharge driving step of rotating the rotors 20a to 20h by the power supplied from the capacitor being the power storage apparatus in the transient state of changing the output of the engine 32.

In addition, the number of flight modes may be one. Since the suppression according to the load fluctuation can be prevented even with one flight mode, it is possible to improve reliability of a long-term flight while the power storage apparatus is prevented from increasing in size.

The shape of the multicopter 1 is an example of implementation and may have another structure. The number of rotors 20 is not limited to eight, and has only to be three or more. In addition, the frame structure also may be another structure. For example, a case where the rotor support frame extends radially with respect to the fuselage region 1a may be used.

In the above embodiment, the fuel consumption in each flight mode is set based on the engine speed of the engine, but the present invention is not limited thereto. For example, in consideration of the efficiency of the engine 32 (output that can be taken out per unit fuel consumption) and the efficiency of the generator 47 (power generation amount with respect to the input), a region in which the efficiency of the entire power generation unit 3 (power that can be output per unit fuel) is satisfactory may be set to the normal output.

In the present embodiment, by rotating the rotor 20 by the power generated by the power generation unit 3, it is possible to prevent an increase in size of the power storage apparatus. In addition, in the present embodiment, a plurality of power generation units 3 are provided. The power generation unit 3 includes many portions that operate as movable portions as compared with the electrical equipments, and there is a high possibility that the power generation unit 3 is determined to be abnormal. By providing a plurality of power generation units 3 including such movable portions (a triple system in the present embodiment), it is possible to achieve the multicopter 1 that improves reliability of long-term flight.

In addition, in the present embodiment, the configuration including a plurality of both the engines 32 and the generators 47 has been described. The present invention is not limited thereto, and the number of apparatuses having a high frequency of occurrence as an abnormal state may be increased. For example, the number of engines 32 and the number of generators 47 do not need to be one-to-one, and a case where the number of any one of them is larger than that of the other is also included in the present invention. For example, a case where two engines 32 and three generators 47 are provided is also included in the present invention.

All the electrical equipments 40 do not need to be disposed in front of the engines 32, and some electrical equipments 40 may be disposed behind the engines 32. The type of the motor and the type of the engine are also not limited. A DC motor may be used, and an existing structure such as a gasoline engine may be used also for the internal combustion engine.

In addition, in the present example, the rotor 20 extends in the horizontal direction in the reference state, but the rotor has only to extend substantially in the horizontal direction, and a case where the rotor 20 is inclined individually is also included in the present invention. In other words, the present invention also includes a case where each of the rotor rotating shafts is inclined from the vertical direction in the reference state. In addition, the rotor 20 may be configured as a counterrotating rotor that offsets the counter torque by arranging two rotors coaxially and rotating the upper stage and the lower stage reversely. In addition, the airframe front-rear direction and the airframe width direction are directions used for describing the vehicle, and can be replaced as the first direction and the second direction. In addition, the multicopter 1 may be provided with a fixed wing or a variable wing that can obtain lift during propulsion.

In addition, a material constituting the frame of the support 10 is preferably a lightweight material, but not particularly limited thereto. For example, an aluminum alloy or a composite material can be used. In addition, the fuel tank may be provided individually for each engine, or may be configured as one main tank capable of supplying fuel to each engine. In this case, a fuel pump that supplies fuel for each engine is preferably provided in the main tank. In addition, besides the main tank, an auxiliary tank capable of supplying fuel to each engine is further preferably provided.

In addition, the configuration in which the output axis a of the engine 32 extends in the airframe width direction DW has been described, but for example, the output shaft of the engine 32 may be disposed to extend in the airframe front-rear direction DL. In this case, since the output shaft of the engine 32 and the generator 47 can be directly coupled, it is not necessary to provide a power transmission mechanism such as a sprocket.

The abnormal state may be determined by detecting an abnormality of the cooling unit 5. That is, when the abnormality of the cooling unit 5 corresponding to the power generation unit 3 is determined, driving of the cooling unit 5 determined to be abnormal and the power generation unit 3 corresponding to the cooling unit 5 determined to be abnormal may be stopped. In this case, the output of the cooling unit 5 not determined to be abnormal and the power generation unit 3 corresponding to the cooling unit 5 not determined to be abnormal may be increased.

In the abnormal state, it is preferable that the cooling unit 5 is also configured to be controllable to increase the cooling performance such as increasing the flow rate of the circulating refrigerant by the pump according to the increase in the output of the power generation unit 3 not determined to be abnormal.

In the above embodiment, the case where the internal-combustion-engine-cooling-system 50 and the electric cooling section 70 are provided for each power generation unit 3 has been described as an example, but the present invention is not limited thereto. That is, with the plurality of engines 32 provided in the plurality of power generation units 3 as one internal combustion engine group, an internal-combustion-engine-cooling-system 50 may be provided for each of the internal combustion engine groups. In addition, in the above embodiment, the case where the internal-combustion-engine-cooling-system 50 is individually provided for each of the three power generation units 3 has been described as an example, but the present invention is not limited thereto. One internal-combustion-engine-cooling-system 50 may cool the internal combustion engine units 30 provided in the three power generation units 3.

Similarly, with the plurality of generators 47 provided in the plurality of power generation units 3, and/or, in addition to these, the plurality of corresponding converters 41 as one generator group, the electric cooling section 70 may be provided for each of the generator groups. In addition, in the above embodiment, the case where the electric cooling section 70 is individually provided for each of the three power generation units 3 has been described as an example, but the present invention is not limited thereto. One electric cooling section 70 may cool the electrical equipments 40 provided in the three power generation units 3.

It should be note that the present invention is not limited to the embodiments described above, and various modifications and changes can be made without departing from the spirit and scope of the present invention described in the claims.

### DESCRIPTION OF SYMBOLS

- 1: Multicopter
- 3: Power generation unit
- 10: Support
- 20: Rotor
- 32: Engine (internal combustion engine)
- 33: Exhaust pipe
- 40: Electrical equipment
- 41: Converter
- 42: Inverter
- 43: Capacitor
- 44: Aggregated electric circuit
- 45: Controller
- 45c: Abnormality determination unit
- 47: Generator
- 48: Motor (electric motor)
- S2: Luggage room

## Claims

1. A multicopter comprising:
a support;
rotors supported by the support;
an internal combustion engine supported by the support;
a generator supported by the support and driven by the internal combustion engine to generate power;
electric motors supported by the support, supplied with electric power from the generator, and configured to drive the rotors; and
a controller configured to control a flight of an airframe by individually adjusting a rotor speed of each of the rotors,
wherein
the multicopter includes at least one of a plurality of internal combustion engines or a plurality of generators.

2. The multicopter according to claim 1, further comprising an aggregated electric circuit configured to aggregate electric power generated by the generators,
wherein the electric motors are connected to the aggregated electric circuit.

3. The multicopter according to claim 2, further comprising power generation units including the internal combustion engine and the generator provided correspondingly to each other,
wherein each of the power generation units is configured to change an output, and
the controller includes an abnormality determination unit that determines whether an abnormality has occurred in the power generation units, and when the abnormality determination unit determines that at least one of the power generation units has an abnormality, the controller performs a high-output control with an output, from another power generation unit in which no abnormality has occurred, being higher than a reference output.

4. The multicopter according to claim 3, wherein
a plurality of the internal combustion engines are provided in an output-variable manner between in a reference output range in which an output at a predetermined reference engine speed is configured to be output and in a high output range in which a high output at a high output engine speed higher than the reference engine speed is output,
when the abnormality determination unit determines that no abnormality has occurred, the controller controls with a normal flight mode in which outputs of the plurality of the internal combustion engines are set to the reference output range, and
when the abnormality determination unit determines that an abnormality has occurred, the controller controls with an abnormal flight mode in which an output of an internal combustion engine in which no abnormality has occurred among the plurality of the internal combustion engines is set to the high output range.

5. The multicopter according to claim 3 or 4, wherein the controller controls to stop driving of a power generation unit in which the abnormality determination unit determines that an abnormality has occurred.

6. The multicopter according to any one of claims 3 to 5, further comprising a capacitor configured to transfer power to and from the aggregated electric circuit,
wherein the electric motors are supplementarily supplied with electric power from the capacitor in addition to electric power from the generator.

7. The multicopter according to any one of claims 1 to 6, further comprising an electrical equipment for driving each of the rotors,
wherein the internal combustion engines are disposed behind the electrical equipment in a traveling direction.

8. The multicopter according to any one of claims 1 to 7, further comprising a luggage room configured to house a load,
wherein the luggage room is disposed below the internal combustion engine.
